# FASCICULE DE BREVET EUROPEEN

(11) **EP 0 913 914 B1**
(45) Date de publication et mention de la délivrance du brevet: **29.10.2008**
(21) Numéro de dépôt: 98402484.4
(22) Date de dépôt: 07.10.1998
(51) Int. Cl.: H02K 21/04, H02K 16/04

(54) **Machine électrique à double excitation, et notamment alternateur de véhicule automobile**
Elektrische Maschine mit doppelter Erregung, insbesondere Wechselstromgenerator für ein Kraftfahrzeug
Double excitation electrical machine, in particular an alternator for a motor vehicle

(30) Priorité: 07.10.1997 FR 9712472
(43) Date de publication de la demande: 06.05.1999
(73) Titulaire: VALEO EQUIPEMENTS ELECTRIQUES MOTEUR, 94000 Créteil (FR)
(72) Inventeur: Akemakou, Dokou Antoine, 94400 Vitry sur Seine (FR)

(56) Documents cités:
- EP-A- 0 723 330
- WO-A-95/00996
- DE-C- 4 139 843
- FR-A- 1 527 594
- US-A- 5 345 133

## Description

La présente invention a trait d'une façon générale aux machines tournantes telles que les alternateurs pour véhicules automobiles.

La génératrice mono ou polyphasée que constitue un alternateur classique de véhicule automobile comporte généralement un stator à l'intérieur duquel tourne un rotor pourvu d'un bobinage d'excitation. Ce bobinage est alimenté par des balais en contact avec deux bagues collectrices prévues sur une partie en saillie de l'arbre du rotor.

On connaît déjà, notamment par EP 0 707 374 des machines tournantes dans lesquelles les bobinages du stator sont excités à la fois par des aimants permanents et des bobines et dans lesquelles on contrôle par commutation le courant délivré par l'induit au niveau du ou des bobinages d'excitation, l'inversion du courant d'excitation servant à diminuer le flux des aimants aux grandes vitesses.

On connaît également de par le document US 5 177 391 une machine électrique comportant un stator et au moins deux rotors, le stator comportant un bobinage d'induit logé dans une paire d'encoches. Un premier rotor comporte au moins un aimant permanent apte à établir un flux magnétique qui s'écoule en direction du stator. Un deuxième rotor comporte un bobinage d'excitation apte à établir un flux magnétique. Le flux dans le premier rotor représente un flux utile que l'on doit annuler si on veut éviter une surcharge en tension d'une batterie et lorsqu'il existe une faible charge sur le réseau de bord du véhicule. Une telle annulation est effectuée au moyen d'un flux dans le bobinage d'excitation qui s'oppose aux flux des aimants permanents. A cet effet, un courant bidirectionnel est utilisé pour, d'une part annuler le flux dans les aimants permanents pour la raison citée ci-dessus, et d'autre part additionner le flux des aimants et le flux du bobinage d'excitation s'il existe une charge importante sur le réseau de bord du véhicule.

Toutefois, du fait que le courant d'excitation est par nature, dans ce type de machine, un courant alternatif bidirectionnel, une telle commutation nécessite le recours à un pont de commutation en "H", dont le coût est élevé.

La présente invention vise à pallier ces inconvénients et à proposer une machine tournante, en particulier un alternateur, dans laquelle la régulation du courant délivré puisse s'effectuer en jouant sur l'excitation, et dans laquelle, malgré le recours à des aimants permanents pour effectuer cette excitation, celle-ci puisse être variée entre une excitation nulle ou essentiellement nulle et une excitation maximale.

Un autre objet de l'invention est de réaliser une machine dans laquelle l'excitation varie dans de telles limites grâce à l'application d'un courant d'excitation qui varie lui aussi entre une valeur nulle et une valeur maximale.

Un autre but de l'invention est de proposer une structure de machine tournante à double entrefer et un seul rotor qui est axialement compacte et d'une puissance massique plus importante.

Ainsi la présente invention propose une machine électrique hybride à double excitation selon la revendication 1.

Une telle structure de régulation permet en effet l'utilisation d'un régulateur classique à un interrupteur pour le réglage de l'excitation, ce qui divise par quatre le coût dû aux interrupteurs par rapport aux machines à courant bidirectionnel.

Notamment, de préférence, le rotor présente une alternance d'une pluralité d'aimants permanents et de structures en H, qui définissent des encoches dans lesquelles les bobinages d'excitation sont reçus.

Ces structures en H permettent d'avoir des longueurs réduites pour les têtes de bobines, ce qui diminue les résistances et par voie de conséquence les pertes Joules d'excitation. Le rendement est donc amélioré.

De préférence encore, la machine comporte un stator interne et un stator externe.

Un des avantages d'une telle structure par rapport à une structure classique de machine tournante à double rotors tient à la faible inertie de son rotor.

Une telle structure est avantageusement utilisée comme alternateur-démarreur à forte puissance massique étant donné qu'elle est compacte axialement et doit délivrer une forte puissance en sortie sur les deux stators.

L'invention concerne également un rotor d'une machine électrique hybride à double excitation du type précité.

D'autres aspects, buts et avantages de la présente invention apparaîtront mieux à la lecture de la description détaillée suivante d'une forme de réalisation préférée de celle-ci, donnée à titre d'exemple et faite en référence aux dessins annexés, sur lesquels :
la figure 1 est une vue schématique sous forme développée d'un ensemble de rotor et de stator d'une machine tournante selon une forme de réalisation simplifiée de l'invention ;
la figure 2 est une vue en coupe transversale partielle d'un ensemble de rotor et de stator d'une machine triphasée réalisée selon l'invention ;
la figure 3 est une vue schématique sous forme développée d'un ensemble de rotor et de stator d'une machine tournante selon une autre forme de réalisation de l'invention ;
la figure 4 est une vue en coupe transversale partielle d'un ensemble de rotor et de stator d'une machine conforme à un autre mode de réalisation de l'invention.

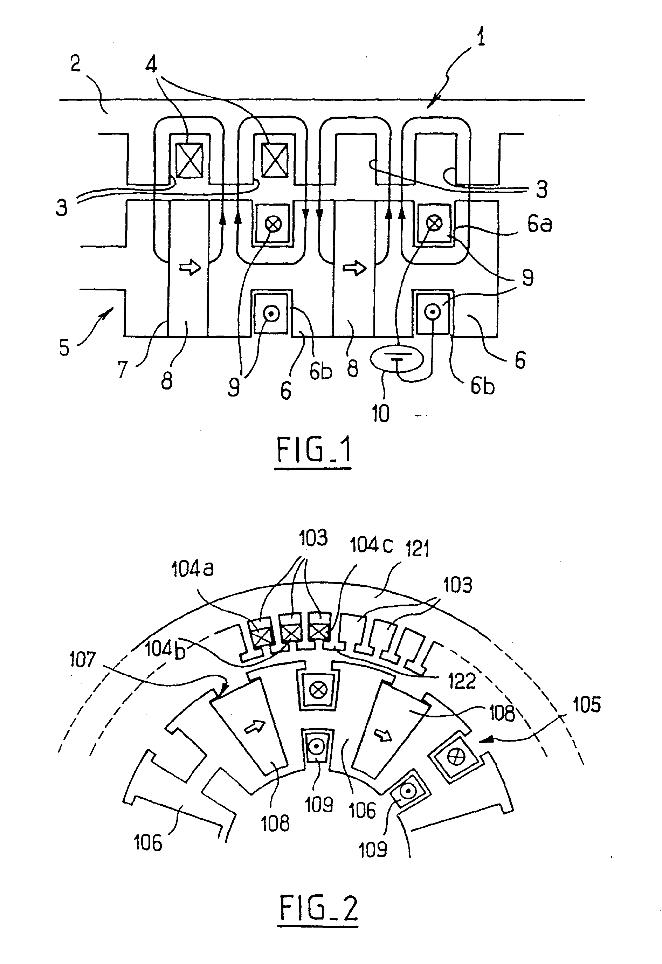

En référence tout d'abord à la figure 1, on a représenté un stator 1 et un rotor 5 pouvant équiper une machine électrique monophasée selon l'invention.

Le stator 1 comporte une carcasse annulaire 2 constituée de deux parties qui définissent une structure annulaire continue. A la périphérie intérieure de cette structure est ménagée une pluralité d'encoches 3 qui reçoivent les brins d'une bobine d'induit 4. Ces encoches 3 sont en un nombre pair et sont régulièrement réparties à la périphérie du stator 1.

Le rotor 5 est défini par une succession de structures 6 en H, qui alternent avec des logements 7 dans lesquels sont reçus des aimants permanents 8.

Les encoches extérieures et intérieures 6a et 6b que définissent les structures 6 en H reçoivent les brins 9 d'une bobine d'excitation, qui sont reliées à des moyens 10 pour leur alimentation par un courant d'excitation réglable.

Ces structures 6 en H et les aimants permanents 8 sont régulièrement répartis sur le rotor 5. Le nombre d'aimants 8 et le nombre de structures 6 en H correspondent l'un et l'autre au nombre de paires de pôles de la machine tournante, c'est à dire à la moitié du nombre d'encoches 3. Plus précisément, les aimants 8 et les structures 6 en H sont répartis de telle sorte que lorsqu'une encoche extérieure 6a est au droit d'une encoche 3 du stator, les aimants 8 de part et d'autre de cette structure en H sont au droit des encoches 3 qui sont de part et d'autre de la première encoche 3.

L'orientation N/S des aimants permanents 8 est telle qu'en l'absence de courant dans les bobines 9, ils engendrent un flux magnétique essentiellement circonférentiel sur le rotor 5, dans le sens des flèches indiquées sur la figure 1.

Ainsi, en l'absence de courant d'excitation, aucun champ ne va circuler à travers le stator 1 (ou seulement une partie négligeable), et ce quelle que soit la position angulaire du rotor 5, si bien qu'aucun courant (sauf un courant négligeable) ne va être engendré dans le bobinage d'induit 4.

L'excitation de la machine est donc nulle.

Si maintenant un courant unidirectionnel est amené à circuler dans la bobine d'excitation 9 de manière à engendrer un flux magnétique dans le sens opposé à celui créé par les aimants 8, cette opposition force le flux des aimants 8 et des bobines 9 à traverser l'entrefer et à s'étendre dans le stator 1, lorsque le courant d'excitation est suffisant.

Il en résulte qu'une force électromotrice d'induit va être engendrée.

On comprend que la valeur de cette force électromotrice dépend de l'amplitude du champ magnétique créé par la bobine 9 d'excitation, pour varier entre une valeur sensiblement nulle et une valeur maximale.

Les aimants 8 et la bobine d'excitation 9 sont dimensionnés pour que les flux de la bobine d'excitation soient du même ordre de grandeur que ceux de l'aimant, pour des intensités de courant d'excitation raisonnables.

Ainsi, en régulant les variations de courant dans la bobine 9, on régule non seulement le flux de la bobine d'excitation 9, mais également le flux des aimants 8 dans le stator. Par conséquent, avec la structure qui vient d'être décrite, on régule le fonctionnement de la machine électrique avec un simple courant unidirectionnel.

La régulation est par exemple réalisée au moyen d'un seul transistor commandé par un microprocesseur de régulation.

On va maintenant décrire en référence à la figure 2 un exemple de réalisation d'une machine polyphasée selon la présente invention.

On a repris pour les éléments de la machine tournante de la figure 1 qui se retrouvent sur cette figure 2 la même numérotation de référence augmentée de 100

Cette machine, en l'espèce triphasée, comprend un rotor 105 qui est identique à celui de la figure 1 et qui comporte une pluralité de structures 106 en H qui alternent avec des aimants permanents 108, les évidements définis par ces structures en H recevant les brins d'une bobine d'excitation 109.

Les aimants permanents 108 sont reçus dans des logements 107 dont la profondeur est légèrement inférieure à l'épaisseur radiale du rotor 105.

Le stator 121 est continu en direction circonférentielle et est réalisé de façon conventionnelle par empilage de tôles. Ce stator 121 possède six encoches 103 par paire de pôles de rotor, ces différentes encoches 103 étant définies par des dents intérieures 122 réparties angulairement de façon essentiellement régulière. Ces encoches 103 reçoivent les brins répartis des différents bobinages de phase 104a, 104b, 104c, trois encoches 103 successives à la périphérie du stator comportant respectivement des brins desdits trois bobinages de phase.

La machine de cette figure 2 opère selon le même principe que celle de la figure 1.

En particulier, lorsqu'aucune excitation n'est appliquée au niveau de la bobine d'excitation 109, les aimants permanents 108 coopèrent pour produire un flux magnétique circulant pratiquement seulement dans le rotor, et les bobinages de phases du stator délivrent donc un courant sensiblement nul.

En revanche, l'établissement d'une excitation dans le sens inverse du champ créé par les aimants permanents 108 provoque des phénomènes de bouclage de champs autour des différents brins des bobinages de phases 104a, 104b, 104c, de telle sorte que la machine engendre lors de la rotation du rotor à une vitesse donnée une force électromotrice triphasée, qui varie sensiblement entre zéro et une valeur maximale lorsque l'on fait varier le courant d'excitation entre zéro et une valeur d'excitation maximale.

Dans les exemples illustrés sur les figures 1 et 2, les rotors 5 et 105 sont emmanchés sur des arbres (non représentés) en des matériaux amagnétiques ou isolés des ensembles aimants permanents/structures en H/bobines d'excitation par des matériaux amagnétiques.

D'autres modes de réalisation sont encore possibles.

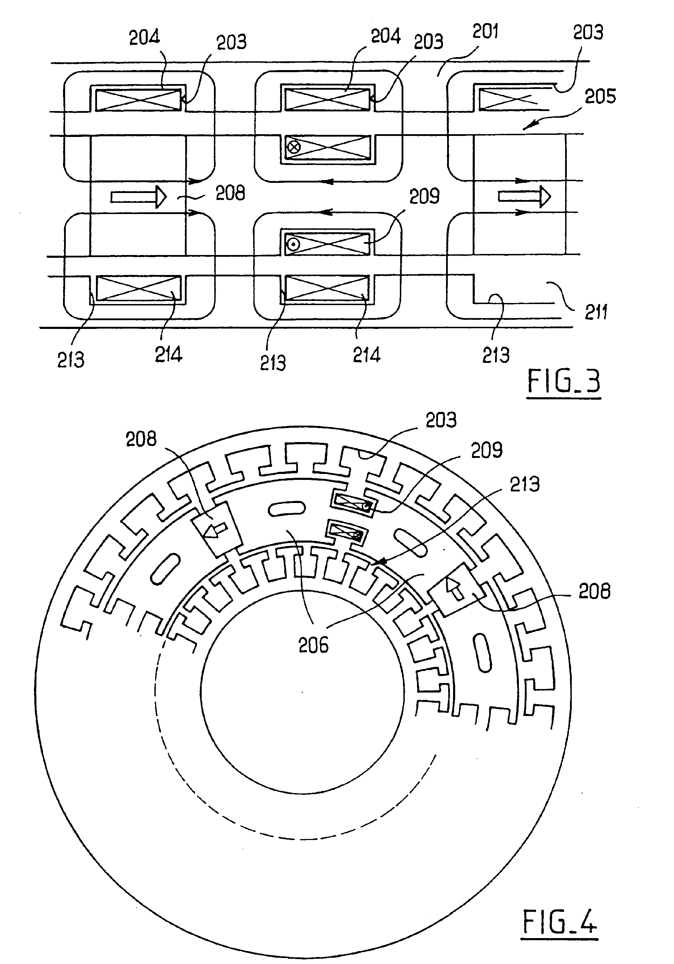

Notamment, ainsi qu'on l'a illustré sur les figures 3 et 4, il est possible de prévoir que le rotor est monté entre un stator externe et un stator interne.

On a repris pour les éléments de la variante illustrée sur la figure 1 que l'on retrouve sur la variante des figures 3 et 4 les mêmes numérotation de référence augmentées de 200.

Ainsi, la machine illustrée sur ces figures 3 et 4 comporte un stator externe 201 et un rotor 205 identiques au stator 1 et au rotor 5.

Notamment, le rotor 205 est constitué d'une succession de pièces 206 en H alternant avec des aimants permanents 208, les encoches définies par les pièces en H les brins d'une bobine d'excitation 209.

Le stator externe 201 est quant à lui constitué par un empilage de tôles et il présente à sa périphérie intérieure une succession d'encoches 203 recevant un bobinage d'induit 204.

Le rotor 205 tourne entre ce stator externe 201 et un stator interne 211 qui est également constitué par un empilement de tôles et présente à sa périphérie intérieure une succession d'encoches 213 recevant également un bobinage d'induit 214. Le nombre d'encoches 213 est identique au nombre d'encoches 203, lesdites encoches 213 étant disposées au droit desdites encoches 203.

Le fonctionnement de cette structure de machine est similaire à celui des machines illustrées sur les figures 1 et 2.

En l'absence de courant d'excitation, le champ magnétique des aimants permanents 208 tourne dans le rotor 205. Aucun courant n'est généré dans les bobines d'induit 204 et 214 lors de la rotation du rotor 205.

Par contre, lorsqu'un courant d'excitation est généré, le flux magnétique des aimants 208 est forcé à s'étendre à travers les deux entrefers jusqu'aux stators intérieurs et extérieurs 201 et 211 et une fe.m. est générée dans les bobinages d'induit 204, 214.

On notera que les bobinages d'induit des deux stators 201 et 211 étant indépendants, cette structure se prête avantageusement à la réalisation d'une machine triphasée bitension, le premier stator pouvant fonctionner à 14 volts, le second à 24 volts, 48 volts ou 96 volts selon les besoins du réseau de bord du véhicule.

Bien entendu, plusieurs structures du type de celles qui viennent d'être décrites peuvent être montées en parallèle ou en série.

Par ailleurs, on observera que les machines des figures 1 à 4 peuvent le cas échéant être soumises à une magnétisation initiale ou à une remagnétisation.

Plus précisément, si les aimants sont montés dans le stator sans avoir été préalablement magnétisés, il suffit d'alimenter les bobinages d'excitation sous un courant inverse du courant d'excitation normal. On crée dans le rotor un champ magnétique circonférentiel de même sens que celui produit par les aimants permanents, et ce champ est capable de magnétiser ou de remagnétiser les aimants. Cet établissement d'un champ inverse de magnétisation ou de remagnétisation peut être effectué par exemple à l'aide de moyens de commutation à semi-conducteurs, que l'homme du métier saura mettre au point sans difficulté. Cette opération peut être effectuée soit à bord du véhicule, avec l'énergie électrique fournie par la batterie, soit en atelier dans le cadre d'une opération d'entretien.

En outre, on notera que la mise en place de bobinages sur les structures en H est facilitée par la forme de ces structures et peut se faire séparément par rapport à la mise en place des aimants permanents.

Et lorsque les aimants sont magnétisés, l'assemblage du rotor sur le ou les stators est d'autant plus facilité que du fait que le flux des aimants permanents se ferme dans le rotor, il n'y a pas de risque que la structure du rotor se plaque sur les pièces ferromagnétiques que constituent notamment les stators interne ou externe.

Par rapport aux structures de l'art antérieur, les nouvelles structures proposées permettent une amélioration de rendement de 10 à 20 %.

Bien entendu, la présente invention n'est nullement limitée aux formes de réalisation décrites et représentées.

En particulier, on peut réaliser à partir des enseignements qui précèdent des machines fonctionnant aussi bien en génératrice qu'en moteur tel que, par exemple, un alterno-démarreur de véhicule automobile, et des machines possédant un nombre de phases quelconque.

De plus, la réalisation du bobinage d'excitation autour des éléments en H (bobinage torique) facilite naturellement leur tenue à la force centrifuge contrairement au bobinage des machines à pôles saillants.

On sait que le principal inconvénient des alternateurs à aimants permanents utilisés dans l'automobile tient au fait d'une présence permanente d'un flux utile généré par les aimants d'où un risque de perte du fonctionnement de la régulation ce qui peut entraîner des surtensions conduisant jusqu'à la destruction totale ou partielle des éléments constituant le réseau de bord. La structure proposée élimine ce problème puisque, en l'absence d'excitation, le flux des aimants est neutralisé car il ne peut se fermer à travers le stator.

## Revendications

1. Machine électrique hybride à double excitation comprenant au moins un stator (1, 121, 201, 211), un rotor (5, 105, 205) et des moyens (10) de commande de courant d'excitation, ledit rotor (5, 105, 205) comportant le long de sa périphérie une alternance d'une pluralité d'aimants permanents (8, 108, 208) et de bobinages d'excitation (9, 109, 209), **caractérisée en ce que**
lesdits aimants permanents (8, 108, 208) ont des pôles nord et sud disposés de manière à établir un flux magnétique se bouclant sur lui même dans une direction circonférentielle dudit rotor (5, 105, 205) lorsque aucun courant d'excitation n'est fourni auxdits bobinages d'excitation (9, 109, 209) par lesdits moyens (10) de commande de courant d'excitation ; et
lesdits bobinages d'excitation (9, 109, 209) sont aptes à établir localement un flux magnétique réglable dans une direction circonférentielle inverse de celle du flux produit par lesdits aimants permanents (8, 108, 208), lorsqu'un courant d'excitation est fourni auxdits bobinages d'excitation (9 , 109, 209) par lesdits moyens (10) de commande de courant d'excitation, de manière à établir des circuits magnétiques fermés passant autour de brins d'au moins un bobinage d'induit (4, 104, 204, 214) dudit stator (1, 121, 201, 211).

2. Machine électrique hybride selon la revendication 1, **caractérisée en ce que** ledit courant d'excitation est un courant unidirectionnel.

3. Machine électrique selon l'une des revendications 1 et 2, **caractérisée en ce que** ledit rotor (5, 105 ; 05) présente une alternance d'une pluralité d'aimants (8, 108, 208) permanents et de structures (6, 106, 206) en H, qui définissent des encoches dans lesquelles les bobinages d'excitation (9, 109, 209) sont reçus.

4. Machine électrique selon l'une des revendications 1 à 3, **caractérisée en ce que** ledit au moins un bobinage d'induit est logé dans au moins une paire d'encoches.

5. Machine selon la revendication 4, **caractérisée en ce qu'**elle comporte un stator (1, 101 ; 201, 211) interne et un stator (1, 101 ; 201, 211) externe.

6. Machine selon la revendication 5, **caractérisée en ce que** les deux stators (201, 211) comportent le même nombre d'encoches, lesdites encoches s'étendant au droit les unes des autres.

7. Machine selon l'une des revendications 4 à 6, **caractérisée en ce qu'**elle comprend des moyens pour établir à l'aide des bobinages d'excitation (9, 109, 209) un champ magnétique inverse de magnétisation ou de remagnétisation des aimants (8, 108, 208) permanents.

8. Machine selon l'une des revendications 4 à 7, **caractérisée en ce qu'**elle est constituée par un alternateur de véhicule automobile.

9. Machine selon l'une des revendications 5 à 8, **caractérisée en ce qu'**elle est constituée par une machine tournante bi-tension.

10. Machine selon la revendication 9, **caractérisée en ce qu'**elle est constituée par un alternateur-démarreur.

## Claims

1. Hybrid electric machine with double excitation, comprising at least one stator (1, 121, 201, 211), a rotor (5, 105, 205) and means (10) for controlling the excitation current, the said rotor (5, 105, 205) comprising along its periphery alternation of a plurality of permanent magnets (8, 108, 208) and excitation windings (9, 109, 209), **characterised in that**
the said permanent magnets (8, 108, 208) have north and south poles which are disposed such as to establish a magnetic flow which is looped around itself in a circumferential direction of the said rotor (5, 105, 205) when no excitation current is supplied to the said excitation windings (9, 109, 209) by the said means (10) for controlling the excitation current; and
the said excitation windings (9, 109, 209) can establish locally a magnetic flow which is adjustable in a circumferential direction which is the inverse of that of the flow produced by the said permanent magnets (8, 108, 208), when an excitation current is supplied to the said excitation windings (9, 109, 209) by the said means (10) for controlling the excitation current, such as to establish closed magnetic circuits which pass around strands of at least one armature winding (4, 104, 204, 214) of the said stator (1, 121, 201, 211).

2. Hybrid electric machine according to claim 1, **characterised in that** the said excitation current is a one-way current.

3. Electric machine according to one of claims 1 and 2, **characterised in that that** said rotor (5, 105; 05) has alternation of a plurality of permanent magnets (8, 108, 208) and structures (6, 106, 206) in the form of an "H", which define notches in which the excitation windings (9, 109, 209) are received.

4. Electric machine according to one of claims 1 to 3, **characterised in that** the said at least one armature winding is accommodated in at least one pair of notches.

5. Machine according to claim 4, **characterised in that** it comprises an inner stator (1, 101; 201, 211) and an outer stator (1, 101; 201, 211).

6. Machine according to claim 5, **characterised in that** the two stators (201, 211) comprise the same number of notches, the said notches extending at right-angles to one another.

7. Machine according to one of claims 4 to 6, **characterised in that** it comprises means for establishing by means of excitation windings (9, 109, 209) an inverse magnetic field for magnetisation or re-magnetisation of the permanent magnets (8, 108, 208).

8. Machine according to one of claims 4 to 7, **characterised in that** it is constituted by a motor vehicle alternator.

9. Machine according to one of claims 5 to 8, **characterised in that** it is constituted by a dual-voltage rotary machine.

10. Machine according to claim 9, **characterised in that** it is constituted by an alternator-starter.

## Patentansprüche

1. Elektrische Hybridmaschine mit Doppelerregung, die wenigstens einen Stator (1, 121, 2D1, 211), einen Rotor (5, 105, 205) und Mittel (10) zur Steuerung des Erregerstroms enthält, wobei der besagte Rotor (5, 105, 205) entlang seinem Umfang eine Wechselfolge von mehreren Permanentmagneten (8, 108, 208) und Erregerwicklungen (9, 109, 209) umfasst, **dadurch gekennzeichnet, dass** die besagten Permanentmagnete (8, 108, 208) Nord- und Südpole aufweisen, die so angeordnet sind, dass ein magnetischer Fluss erzeugt wird, der in einer Umfangsrichtung des besagten Rotors (5, 105, 205) in sich geschlossen ist, wenn kein Erregerstrom durch die besagten Mittel (10) zur Steuerung des Erregerstroms an die besagten Erregerwicklungen (9, 109, 209) geliefert wird; und
die besagten Erregerwicklungen (9, 109, 209) in der Lage sind, örtlich einen regelbaren magnetischen Fluss in einer Umfangsrichtung entgegengesetzt zu derjenigen des durch die besagten Permanentmagneten (8, 108, 208) erzeugten Flusses zu erzeugen, wenn ein Erregerstrom durch die besagten Mittel (10) zur Steuerung des Erregerstroms an die besagten Erregerwicklung (9, 109, 209) geliefert wird, so dass geschlossene Magnetkreise entstehen, die um Endstücke wenigstens einer Ankerwicklung (4, 104, 204, 214) des besagten Stators (1, 121, 201, 211) verlaufen.

2. Elektrische Hybridmaschine nach Anspruch 1, **dadurch gekennzeichnet, dass** der besagte Erregerstrom ein einseitig gerichteter Strom ist.

3. Elektrische Maschine nach einem der Ansprüche 1 und 2, **dadurch gekennzeichnet, dass** der besagte Rotor (5, 105; 05) eine Wechselfolge von mehreren Permanentmagneten (8, 108, 208) und von H-förmigen Strukturen (6, 106, 206) aufweist, die Nuten definieren, in denen die Erregerwicklungen (9, 109, 209) aufgenommen sind.

4. Elektrische Maschine nach einem der Ansprüche 1 bis 3, **dadurch gekennzeichnet, dass** die besagte wenigstens eine Ankerwicklung in wenigstens einem Nutenpaar aufgenommen ist.

5. Maschine nach Anspruch 4, **dadurch gekennzeichnet, dass** sie einen inneren Stator (1, 101; 201, 211) und einen äußeren Stator (1, 101; 201, 211) umfasst.

6. Maschine nach Anspruch 5, **dadurch gekennzeichnet, dass** die beiden Statoren (201, 211) die gleiche Anzahl von Nuten enthalten, wobei sich die besagten Nuten jeweils auf gleicher Höhe erstrecken.

7. Maschine nach einem der Ansprüche 4 bis 6, **dadurch gekennzeichnet, dass** sie Mittel umfasst, um mit Hilfe der Erregerwicklungen (9, 109, 209) ein entgegengesetztes Magnetfeld zur Magnetisierung bzw. Remagnetisierung der Permanentmagnete (8, 108, 208) zu erzeugen.

8. Maschine nach einem der Ansprüche 4 bis 7, **dadurch gekennzeichnet, dass** sie aus einem Wechselstromgenerator für Kraftfahrzeuge besteht.

9. Maschine nach einem der Ansprüche 5 bis 8, **dadurch gekennzeichnet, dass** sie aus einer rotierenden Zweispannungs-Maschine besteht.

10. Maschine nach 9, **dadurch gekennzeichnet, dass** sie aus einem Anlassergenerator besteht.
